# EUROPÄISCHE PATENTSCHRIFT

(11) **EP 4 121 679 B1**
(45) Veröffentlichungstag und Bekanntmachung des Hinweises auf die Patenterteilung: **31.01.2024**
(21) Anmeldenummer: 21815118.1
(22) Anmeldetag: 11.11.2021
(51) Int. Cl.: F16L 11/22, E03C 1/04, F16L 39/02

(54) **MEHRSCHLAUCHANORDNUNG**
MULTI-HOSE ARRANGEMENT
ENSEMBLE MULTI-TUYAUX

(30) Priorität: 13.11.2020 DE 202020106539 U
(43) Veröffentlichungstag der Anmeldung: 25.01.2023
(73) Patentinhaber: Neoperl GmbH, 79379 Müllheim (DE)
(72) Erfinder: REINHARDT, Holger, 79232 March/Buchheim (DE)
(74) Vertreter: Mertzlufft-Paufler, Cornelius
(86) Internationale Anmeldenummer: PCT/EP2021/081334
(87) Internationale Veröffentlichungsnummer: WO 2022/101319

(56) Entgegenhaltungen:
- WO-A1-02/37016
- DE-B3-102017 101 566
- DE-U1-202019 102 837
- GB-A- 2 068 490
- US-A- 5 913 336

## Beschreibung

Die Erfindung betrifft eine Mehrschlauchanordnung mit einem Außenschlauch und wenigstens einem in dem Außenschlauch angeordneten Innenschlauch und wenigstens einem Kupplungsende, an dem der Außenschlauch und der wenigstens eine Innenschlauch angebunden sind.

Eine solche Mehrschlauchanordnung ist zum Beispiel aus der GB 2068490A bekannt.

In einer solchen Mehrschlauchanordnung werden beispielsweise kaltes und warmes Wasser getrennt voneinander einem Mischwasser zugeleitet oder verschiedene Gewässer, beispielsweise angereichertes Wasser, in einem Wasserkanal zugeführt. Bekannt sind derartige Mehrschlauchanordnungen beispielsweise aus Küchenanschluss-Auszugsschläuchen oder anderen Schlauchanordnungen.

Die Fertigung einer solchen Mehrschlauchanordnung, ist oftmals mit hohem Aufwand verbunden. Darüber hinaus verkleinern die Kupplungsenden, an dem der Außenschlauch und der wenigstens eine Innenschlauch angebunden sind, bauartbedingt die Durchflussfläche, durch die vom Außenschlauch geführte Flüssigkeiten treten können.

Der Erfindung liegt die Aufgabe zugrunde, die Fertigung der eingangs beschriebenen Mehrschlauchanordnung zu vereinfachen.

Diese Aufgabe wird durch eine Mehrschlauchanordnung mit den Merkmalen von Anspruch 1 gelöst. Vorteilhafte Ausgestaltungen der Erfindung sind in den abhängigen Ansprüchen definiert.

Dies hat den Vorteil, dass die komplexe Formgebung, die sich bei einem vollumfänglichen Greifen des Innenschlauchs an der Außenseite ergibt, vermieden ist. Damit ist das Kupplungsende einfacher herstellbar. Ferner wird weniger, im Durchflussquerschnitt des Außenschlauchs angeordnetes Material benötigt. Somit wird eine vergrößerte Durchflussöffnung des Außenschlauchs bereitgestellt.

In einer Ausgestaltung ist vorgesehen, dass die Aufnahme den wenigstens einen Innenschlauch an mehr als einem halben Umfang umgreift. Hierdurch ist gewährleistet, dass der Innenschlauch fest in der Aufnahme arretiert werden kann, was in einer stabilen Anordnung des Innenschlauchs relativ zum Außenschlauch und dem Kupplungsende resultiert.

In einer weiteren Ausgestaltung ist vorgesehen, dass die Durchflussöffnung und die Aufnahme durch zueinander exzentrisch versetzte Bohrlöcher gebildet sind. Dabei kann das Bohrloch der Aufnahme so positioniert sein, dass sein Umfang den Umfang des Bohrlochs der Durchflussöffnung schneidet. Dies stellt eine besonders einfache Weise dar, die den Innenschlauch an weniger als einem vollen Umfang umgreifende Aufnahme herzustellen.

In einer weiteren Ausgestaltung ist vorgesehen, dass der schlauchnippel ein vercrimpter Schlauchnippel ist, insbesondere mit einer von innen aufgeweiteten Crimphülse, wobei der Schlauchnippel beispielsweise aus Messing oder Edelstahl gefertigt ist.

Durch das Einsetzen des Schlauchnippels in die Aufnahme, wobei der Schlauchnippel vorzugsweise aus einem härteren Material als der Schlauch selbst besteht, kann die relative Anordnung der Schläuche und des Kupplungsendes weiter stabilisiert werden.

In einer weiteren Ausgestaltung ist vorgesehen, dass der Schlauchnippel mit einer Presspassung in der Aufnahme gehalten ist, was einen sicheren Halt des Schlauchnippels in der Aufnahme herbeiführt, der ohne weitere Mittel und damit einfach realisierbar ist.

In einer weiteren Ausgestaltung ist vorgesehen, dass an dem Schlauchnippel ein vorzugsweise umlaufender Haltekragen ausgebildet ist, der sich an dem Kupplungsende abstützt. Dies hat den Vorteil, dass der Schlauchnippel an dem Kupplungsende auf einfache Weise in eine Längsrichtung arretierbar ist.

In einer weiteren Ausgestaltung ist vorgesehen, dass der Haltekragen in die Absenkung des Kupplungsendes passt, insbesondere wobei der Haltekragen eine Tiefe der Absenkung ausfüllt. Dies hat den Vorteil, dass der Schlauchnippel an dem Kupplungsende auf einfache Weise ebenfalls in eine Querrichtung, senkrecht zur Längsrichtung arretierbar ist. Ferner kann hierdurch der Schlauchnippel planar in die Aufnahme eingesetzt werden, woraus eine ebene Dichtfläche auf der Aufnahme bzw. dem Schlauchnippel resultiert.

In einer weiteren Ausgestaltung, nicht Teil der Erfindung, ist vorgesehen, dass der Schlauchnippel und/oder die zugehörige Crimphülse und/oder der wenigstens eine Innenschlauch über die plane Stirnfläche heraussteht. Hierdurch kann ein, auf der planen Stirnfläche angeordnetes Bauteil, wie beispielsweise ein aufliegendes Dichtelement, mittels einer entsprechenden Aussparung oder Öffnung an dem herausstehenden Schlauchnippel und/oder der zugehörige Crimphülse und/oder dem wenigstens eine Innenschlauch orientiert angebracht bzw. an diesem/dieser arretiert werden.

In einer weiteren Ausgestaltung ist vorgesehen, dass auf das freie Kupplungsende ein Dichtelement aufgesetzt ist, welches den wenigstens einen Innenschlauch entlang eines vollen Umfangs umfasst. Derart kann eine gegenüber dem Außenschlauch abgedichtete Verbindung zu dem Innenschlauch hergestellt werden.

In einer weiteren Ausgestaltung ist vorgesehen, dass ein Außendurchmesser des wenigstens einen Innenschlauches, insbesondere des zugehörigen Schlauchnippels, kleiner als ein Innendurchmesser der Durchflussöffnung, insbesondere höchstens halb so groß, ist. Hierdurch wird gewährleistet, dass die Durchflussöffnung auch nach dem Anbringen des Innenschlauchs eine Öffnung aufweist, die mit dem Außenschlauch verbunden ist, welche darüber hinaus Platz für die Aufnahme mindestens eines weiteren Innenschlauchs bietet.

In einer weiteren Ausgestaltung ist vorgesehen, dass in dem Außenschlauch wenigstens zwei Innenschläuche angeordnet sind, deren jeweilige, vorzugsweise gleichartig ausgebildete, Aufnahmen voneinander beabstandet, insbesondere einander gegenüber liegend, an der Durchflussöffnung angeordnet sind und/oder der jeweilige Schlauchnippel getrennt voneinander oder miteinander verbunden, insbesondere einstückig, ausgebildet sind. Hierdurch können die mehreren in dem Außenschlauch angeordneten Innenschläuche an dem Kupplungsende jeweils einzeln angebracht und entfernt werden. Darüber hinaus sind die mehreren Innenschläuche ohne zusätzliche, die Durchflussöffnung verkleinernde, Mittel mit dem Kupplungsende verbunden und damit relativ zu einander fest angeordnet.

In einer weiteren Ausgestaltung ist vorgesehen, dass zumindest eine der Aufnahmen, in die die miteinander verbundenen, insbesondere einstückig ausgebildeten, Schlauchnippel eingesetzt sind, weniger als einen halben Umfang des jeweiligen Innenschlauchs umgreift.

Beispielsweise kann jeweils eine Aufnahme für die beiden Innenschläuche vorgesehen sein. Die beiden Aufnahmen können in der Durchflussöffnung gegenüber voneinander angeordnet sein. Die miteinander verbundenen Schlauchnippel stützen sich dabei aneinander ab, sodass ein Umgreifen der Aufnahmen an weniger als einem halben Umfang, beispielsweise weniger als einem viertel Umfang, ausreicht, um die Innenschläuche stabil in den Aufnahmen zu halten. Somit wird weniger Bohrfläche für die Aufnahmen benötigt. Folglich kann die Durchflussöffnung größer gewählt werden.

In einer weiteren Ausgestaltung ist vorgesehen, dass ein Mittenabstand der wenigstens zwei Innenschläuche am Kupplungsende wenigstens so groß wie der oder ein Innendurchmesser der Durchflussöffnung ist. Dies hat den Vorteil, dass nach dem Anbringen der beiden Innenschläuche, die Innenschläuche weniger Fläche der Durchflussöffnung bedecken.

In einer weiteren Ausgestaltung ist vorgesehen, dass der Außenschlauch eine vorzugsweise gewellte Innenlage und/oder eine vorzugsweise geflochtene Außenlage aufweist. Derart ist eine Mehrschlauchanordnung bereitgestellt, deren Außenschlauch sowohl flexibel biegbar als auch robust ist.

In einer weiteren Ausgestaltung ist vorgesehen, dass der Außenschlauch mit dem Kupplungsende vercrimpt ist, womit eine einfache und feste Anbindung des Außenschlauchs an das Kupplungsende gewährleistet ist.

Nachstehend wird die Erfindung anhand mehrerer bevorzugter Ausführungsbeispiele noch näher beschrieben.

Es zeigt:
- Fig. 1: eine erste Mehrschlauchanordnung in dreidimensionaler Ansicht und in Draufsicht.
- Fig. 2: die erste Mehrschlauchanordnung mit einem Dichtelement in dreidimensionaler Ansicht und in Draufsicht,
- Fig. 3: die Mehrschlauchanordnung mit dem Dichtelement in einer Explosionsdarstellung,
- Fig. 4: eine zweite Mehrschlauchanordnung in dreidimensionaler Ansicht und in einer Explosionsdarstellung,
- Fig. 5: Seitenansichten der ersten Mehrschlauchanordnung während eines Fertigungsprozesses der ersten Mehrschlauchanordnung.

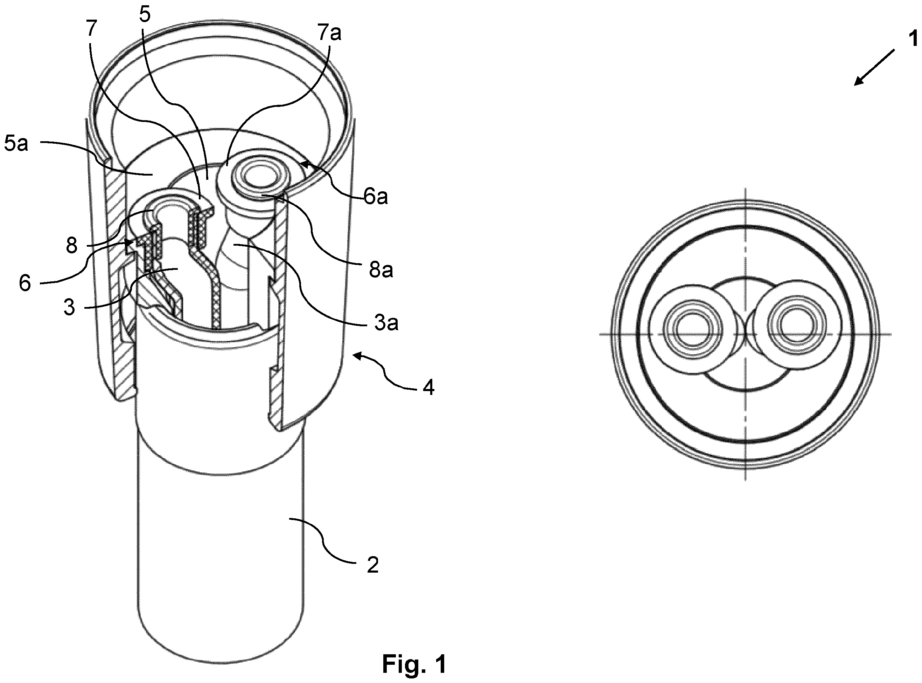

Figur 1 zeigt eine Mehrschlauchanordnung 1 in dreidimensionaler Ansicht und in Draufsicht mit einem Außenschlauch 2, zwei in dem Außenschlauch angeordnete Innenschläuche 3 und 3a sowie einem Kupplungsende 4. An dem Kupplungsende 4 sind der Außenschlauch 2 und die Innenschläuche 3, 3a angebunden. Der Außenschlauch 2 ist mit dem Kupplungsende 4 vercrimpt, beispielsweise von außen oder mittels Durchziehniet-Technologie. Das Kupplungsende 4 weist ferner eine Durchflussöffnung 5 für den Außenschlauch 2 auf. Innerhalb der Durchflussöffnung 5 sind zwei Aufnahmen 6, 6a angeordnet. Die Aufnahmen 6, 6a sind gleichartig ausgestaltet.

Die Aufnahme 6 umgreift den Innenschlauch 3 an weniger als einem vollen Umfang. Gleichermaßen umschließt die Aufnahme 6a den Innenschlauch 3a an weniger als einem vollen Umfang.

Die Durchflussöffnung 5 ist durch eine Bohrung in dem Kupplungsende 4 entlang einer Mittelachse des Kupplungsendes 4 gebildet. Die beiden Aufnahmen 6 und 6a sind durch Bohrungen gebildet, die jeweils exzentrisch zur Bohrung der Durchflussöffnung 5 versetzt sind. Dabei überschneidet sich ein senkrecht zur Mittelachse stehender Querschnitt der Bohrung der Durchflussöffnung 5 jeweils mit senkrecht zur Mittelachse stehenden Querschnitten der Bohrungen der Aufnahmen 6 und 6a. Derart stellen die Aufnahmen 6 und 6a unvollständige bzw. offene Kreisformen dar. Mittels der offenen Kreisform der Aufnahmen 6 und 6a umgreifen die Aufnahmen 6 und 6a die beiden Innenschläuche 3 und 3a - hier mit ihren jeweiligen Schlauchnippeln 7, 7a - jeweils an weniger als einem vollen Umfang, insbesondere, wie dargestellt, an mehr als einem halben Umfang. Hierdurch ist gewährleistet, dass die beiden Innenschläuche 3 und 3a fest an das Kupplungsende 4 angebunden werden können, ohne dass diese sich ungewollt aus den Aufnahmen 6 und 6a lösen. Die aufgesteckten und vercrimpten Schlauchnippel 7, 7a werden hierbei in die Aufnahmen 6, 6a axial eingepresst. Alternativ kann der Innenschlauch 3 oder 3a (hier beispielhaft mit Schlauchnippeln mit 7 und 7a) in die jeweilige Aufnahme 6, 6a radial auswärts eingesetzt, insbesondere hineingedrückt werden.

Das Kupplungsende weist eine die Durchflussöffnung 5 umschließende Bohrfläche oder einen (Bohr-)Kragen 5a der Durchflussöffnung, die/der die Bohrungen der beiden Aufnahmen 6 und 6a zumindest teilweise umfasst. Der gezeigte Kragen 5a umfasst die Bohrungen 6 und 6a an weniger als einem vollen Umfang. Damit kann der Kragen 5a dünner ausgestaltet sein, als ein Kragen der die Bohrungen 6 und 6a jeweils an deren vollem Umfang umschließt. Hierdurch kann nicht nur Material eingespart und die Herstellung der Mehrschlauchanordnung 1 vereinfacht werden. Es kann darüber hinaus die Durchflussöffnung 5 vergrößert werden.

Ferner ist ein Mittenabstand der beiden Innenschläuche 3 und 3a am Kupplungsende wenigstens so groß wie der oder ein Innendurchmesser der Durchflussöffnung 5. Im gezeigten Beispiel ist der Mittenabstand der beiden Innenschläuche 3 und 3a genauso groß wie ein Innendurchmesser der Durchflussöffnung 5. Mit anderen Worten: die Zentren der Bohrung für die Aufnahmen der beiden Innenschläuche 3 und 3a liegen sich gegenüber, hier insbesondere jeweils auf dem Rand der Bohrung für die Durchflussöffnung 5. In dieser Anordnung können die Aufnahmen 6 und 6a zur festen Aufnahme der beiden Innenschläuche 3 und 3a, sowie eine relativ große Durchflussöffnung 5 bereitgestellt werden.

Der Innenschlauch 3 umfasst oder trägt einen Schlauchnippel 7, dessen Öffnung den Innenschlauch 3 aufnimmt. Der Innenschlauch 3a trägt einen Schlauchnippel 7a, der entsprechend gleichartig ausgebildet ist. Der Innenschlauch 3 ist mit dem Schlauchnippel 7 mittels einer Crimphülse 8 verbunden. Die Crimphülse 8 ist innerhalb des Innenschlauchs 3 und innerhalb des Schlauchnippels 7 angeordnet. Durch Aufweiten der Crimphülse 8 kann der Innenschlauch 3 fest mit dem Schlauchnippel 7 verbunden werden. Hierzu ist die Crimphülse 8 aus einem weicheren Material hergestellt als der Schlauchnippel 7. Der Schlauchnippel 7 ist beispielsweise aus einem Hartmetall, Messing oder Edelstahl gefertigt.

Der Schlauchnippel 7 ist in der Aufnahme 6 gehalten. Der Schlauchnippel 7 kann beispielsweise mittels Presspassung in der Aufnahme 6 gehalten sein. Der Schlauchnippel 7 weist außerdem einen Haltekragen auf, der sich an dem Kupplungsende 4 abstützt. Dabei füllt der Haltekragen oder der gesamte Schlauchnippel 7 eine Aussparung bzw. Absenkung innerhalb des Kupplungsendes 4 aus. Der Haltekragen bzw. der Schlauchnippel 7 schließt planar mit dem Kragen 5a ab. Mit anderen Worten liegen die vom Schlauchnippel 7 gebildete Öffnung und die Durchflussöffnung 5 innerhalb einer ebenen Fläche. Wiederum anders formuliert weist das Kupplungsende eine plane Stirnfläche auf. Der Innenschlauch 3 bzw. die Crimphülse 8 ragen über die plane Stirnfläche hinaus. Alternativ oder ergänzend ragt der Schlauchnippel 7 über die Bohrfläche 5a hinaus.

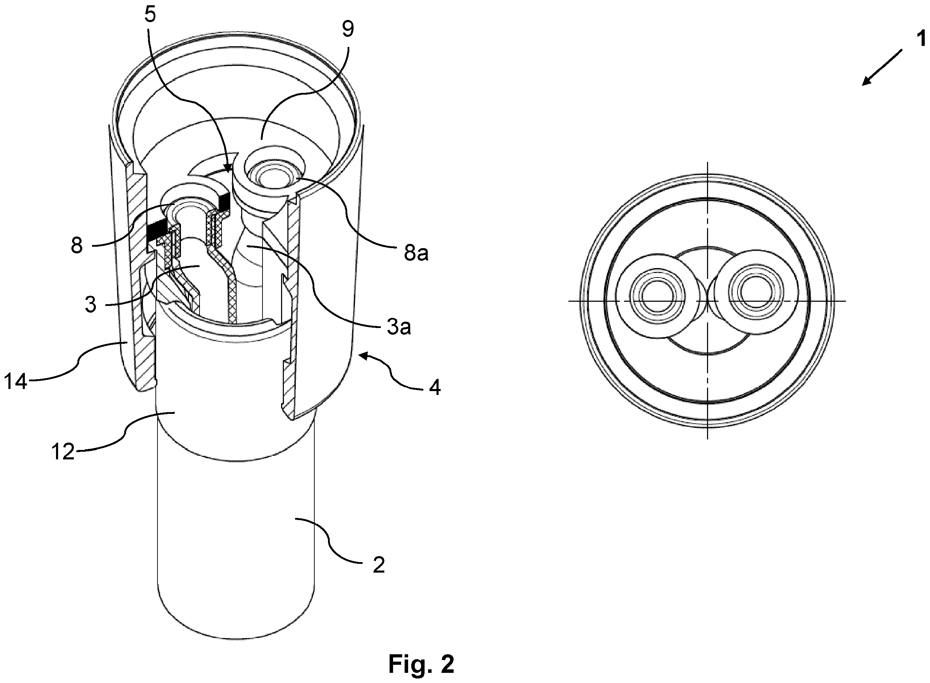

Figur 2 zeigt die Mehrschlauchanordnung 1 aus Figur 1. Gleiche o. ä. Merkmale sind mit gleichen Bezugszeichen versehen. Die in Figur 2 gezeigte Mehrschlauchanordnung 1 umfasst ein Dichtelement 9. Das Dichtelement 9 ist kreisförmig ausgestaltet. Der Außendurchmesser des Dichtelements 9 entspricht in etwa dem oder einem lichten Innendurchmesser des Kupplungsendes 4. Das Dichtelement 9 weist mehrere Öffnungen auf, nämlich je eine Öffnung für die beiden Innenschläuche 3 und 3a sowie eine Öffnung für die Durchflussöffnung 5. Die Öffnungen des Dichtelements 9 für die Innenschläuche 3 und 3a umschließen die Innenschläuche 3 und 3a entlang eines vollen Umfangs. Die Innendurchmesser der Öffnungen des Dichtelements 9 für die Innenschläuche 3 und 3a entsprechen einem Außendurchmesser der jeweiligen Crimphülsen 8 und 8a, insbesondere dem Außendurchmesser der über die plane Stirnfläche des Kupplungsendes 4 hinausragenden Teils der Crimphülsen 8 und 8a.

Durch die plane Stirnfläche des Kupplungsendes 4 ist eine plane Dichtfläche bereitgestellt. Hierdurch wird die Dichtfunktion des Dichtelements 9 verbessert. Die Öffnungen des Dichtelements 9 für die Innenschläuche 3 und 3a umschließen die aus der planen Stirnfläche des Kupplungsendes 4 herausragenden Crimphülsen 8, 8a oder Innenschläuche 3 und 3a. Derart wird die Rotationsposition des Dichtelements 9 relativ zum Kupplungsende 4 fixiert.

In den Figuren 1 und 2 sind die Schlauchnippel 7 und 7a getrennt voneinander ausgebildet. Alternativ können die beiden Schlauchnippel 7 und 7a miteinander verbunden oder einstückig ausgebildet sein. Mit anderen Worten kann ein Schlauchnippel-Bauteil beide Schlauchnippel 7 und 7a umfassen. Ein derartiges Schlauchnippel-Bauteil kann in beide Aufnahmen 6 und 6a gleichzeitig eingesetzt werden. Derart wird das Schlauchnippel-Bauteil von beiden Aufnahmen 6 und 6a gestützt. Mit anderen Worten wird Schlauchnippel 7 neben der Aufnahme 6 auch von dem Schlauchnippel 7a gestützt. Hierdurch können die jeweiligen Aufnahmen 6 und 6a derart ausgestaltet werden, dass sie die Innenschläuche 3 und 3a an jeweils weniger als einem halben Umfang umfassen, beispielsweise an jeweils weniger als oder gleich einem viertel Umfang, ohne dass die Stabilität der Schlauchnippel 7 und 7a beeinträchtigt wäre. Nochmals anders ausgedrückt: Die Aufnahmen 6 und 6a können jeweils einen Mittelpunktswinkel der Innenschläuche 3 und 3a umschließen, der kleiner 180°, beispielsweise kleiner oder gleich 90° ist. Damit kann die Durchflussöffnung 5 vergrößert werden bei gleichzeitiger Gewährleistung eines festen Halts der Schlauchnippel 7 und 7a in den jeweiligen Aufnahmen 6 und 6a.

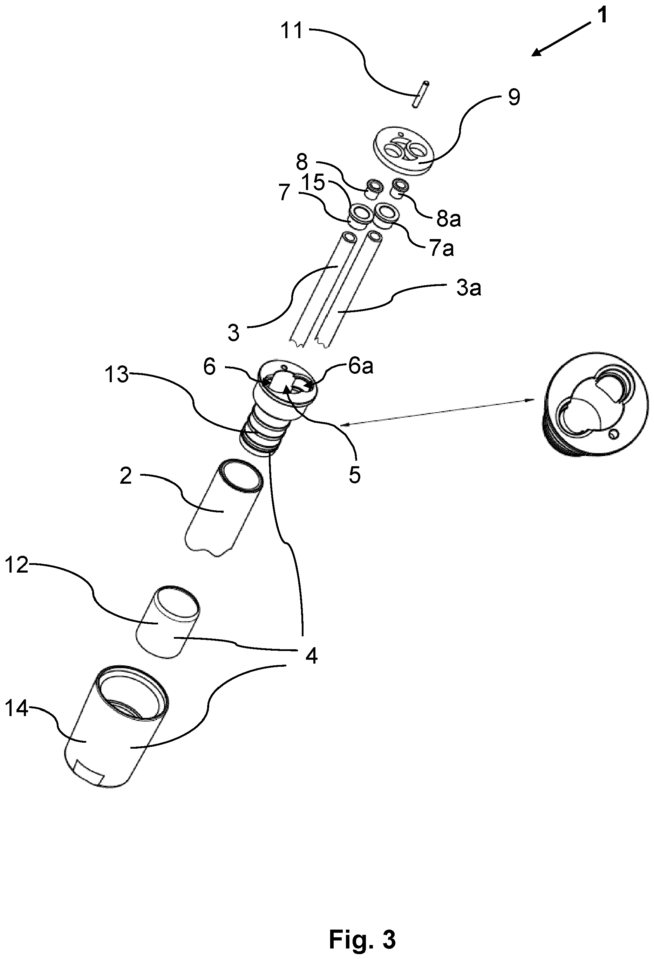

Die Figur 3 zeigt eine Explosionsdarstellung der Mehrschlauchanordnung 1 aus Figur 2. Gleiche o. ä. Merkmale sind mit gleichen Bezugszeichen versehen.

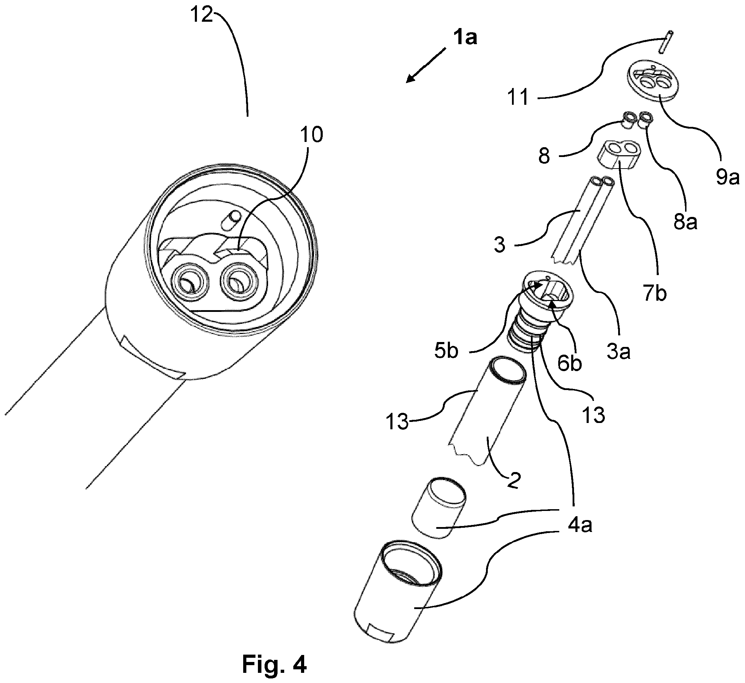

Die Figur 4 zeigt eine dreidimensionale Ansicht und eine Explosionsdarstellung eines zweiten Ausführungsbeispiels einer Mehrschlauchanordnung 1a ähnlich der ersten Mehrschlauchanordnung 1. Gleiche o. ä. Merkmale sind mit gleichen Bezugszeichen versehen. Die Mehrschlauchanordnung 1a umfasst einen Außenschlauch 2 und zwei in dem Außenschlauch 2 angeordnete Innenschläuche 3 und 3a sowie eine Kupplungsende 4a. Das Kupplungsende 4a weist eine Durchflussöffnung 5b für den Außenschlauch 2 auf. In der Durchflussöffnung 5b ist eine Aufnahme 6b für die beiden Innenschläuche 3 und 3a angeordnet. Mit anderen Worten: Die beiden Innenschläuche 3 und 3a sind in einer gemeinsamen Aufnahme 6b angeordnet. Die gemeinsame Aufnahme 6b umgreift die beiden Innenschläuche 3 und 3a - hier beispielhaft mit einem gemeinsamen Schlauchnippel 7b - an weniger als einem vollen Umfang. Derart schließt, wie schon im in den Figuren 1-3 gezeigten Ausführungsbeispiel, die Durchflussöffnung 5b direkt an die Aufnahme(n) 6 und 6a bzw. 6b der beiden Innenschläuche 3 und 3a an. Wie dargestellt, umschließt die gemeinsame Aufnahme 6b die beiden Innenschläuche 3 und 3a an jeweils mehr als einem halben Umfang. Anders ausgedrückt: Die Aufnahme 6a umschließt jeweils einen Mittelpunktswinkel der Innenschläuche 3 und 3a, der kleiner 360° und größer 180° ist. Alternativ kann die gemeinsame Aufnahme 6b die beiden Innenschläuche 3 und 3a an jeweils weniger als einem halben Umfang umschließen.

Die Mehrschlauchanordnung 1a umfasst ein einstückig ausgebildetes Schlauchnippel-Bauteil 7b, das zwei Schlauchnippel umfasst. Das Schlauchnippel-Bauteil 7b entspricht den beiden, einstückig verbundenen Schlauchnippeln 7 und 7a. Die Schlauchnippel des Schlauchnippel-Bauteils 7b sind auf gleiche Weise wie die Schlauchnippel 7 und 7a mit jeweils einer von innen aufgeweiteten Crimphülse 8, 8a vercrimpt. Das Schlauchnippel-Bauteil 7b bildet mit dem Kupplungsende 4a eine plane Stirnfläche. Wie mit Bezug auf die Figuren 1-3 beschrieben, kann das Schlauchnippel-Bauteil 7b mit einer Presspassung in der Aufnahme 6b gehalten werden. Das Schlauchnippel-Bauteil 7b liegt auf einer Auflageschulter 10 des Kupplungsendes 4a auf. Ergänzend oder alternativ passt das Schlauchnippel-Bauteil 7b in eine Absenkung des Kupplungsendes 4a und/oder füllt eine Tiefe der Absenkung aus.

Die Crimphülsen 8 bzw. die Innenschläuche 3 und 3a ragen über die plane Stirnfläche hinaus. Ebenfalls gezeigt ist ein Dichtelement 9a. Das Dichtelement 9a weist jeweils Öffnungen auf für die Öffnungen des Schlauchnippel-Bauteils 7b bzw. der Innenschläuche 3 und 3a und der Durchflussöffnung 5b, wobei die Öffnungen des Dichtelements 9a für die Innenschläuche 3 und 3a wiederum auf die überstehenden Crimphülsen 8 und 8a passen.

Ferner ist gezeigt ein Arretierelement 11, welches sowohl in eine Öffnung in dem Kupplungsende 4a als auch in einer Öffnung in dem Dichtelement 9a eingreift bzw. diese ausfüllt. Damit ist die Position oder die Rotationsposition des kreisförmigen Dichtelements 9a relativ zum Kupplungsende 4a arretierbar.

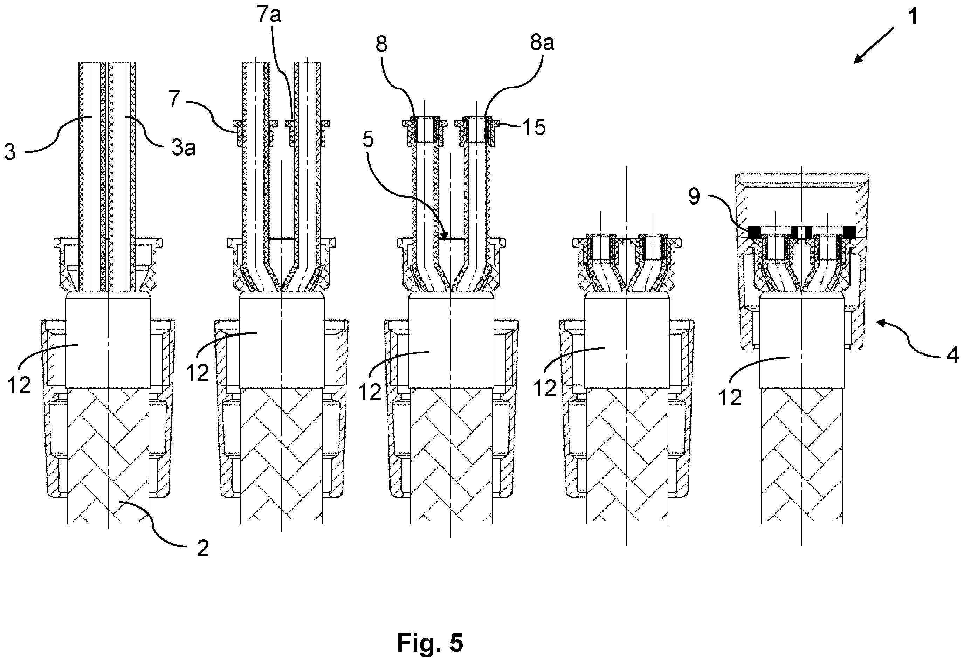

Figur 5 zeigt einen Fertigungsprozess der in den Figuren 1-3 gezeigten Mehrschlauchanordnung 1. Gleiche o. ä. Merkmale sind mit gleichen Bezugszeichen versehen.

Ein erster Schritt (Fig. 5, linke Abbildung) umfasst das Verbinden, insbesondere das Vercrimpen des Außenschlauchs 2 mit dem Kupplungsende 4. Insbesondere kann eine Außenhülse 12 mit einer Innenhülse 13 des Kupplungsendes 4 verpresst sein. Der Außenschlauch 2 ist zwischen Außenhülse 12 und Innenhülse 13 angeordnet.

Der erste Schritt umfasst somit das Anbringen des Außenschlauchs 2 an das Kupplungsende 4, wobei zwei Innenschläuche 3 und 3a in dem Außenschlauch 2 angeordnet sind. Insbesondere umfasst der erste Schritt das Einführen des Außenschlauchs 2 in das Kupplungsende 4.

Ein zweiter Schritt umfasst ein Vercrimpen der Innenschläuche 3 und 3a mit jeweils einem Schlauchnippel 7, 7a mittels einer Crimphülse 8, 8a. Insbesondere umfasst der zweite Schritt (i) das Einführen der Innenschläuche 3 und 3a in die Schlauchnippel 7 und 7a (vgl. Fig. 5, 2. Abbildung von links), (ii) das Einführen der Crimphülsen 8 und 8a in die Innenschläuche 3 und 3a und in die Schlauchnippel 7 und 7a und (iii) das Aufweiten der Crimphülsen 8 und 8a zum Vercrimpen der Innenschläuche 3 und 3a mit jeweils einem Schlauchnippel 7, 7a. Es ergibt sich somit die mittlere Abbildung von Fig. 5

Der dritte Schritt (2. Abbildung von rechts in Fig. 5) umfasst insbesondere das Presspassen der Schlauchnippel 7, 7a der Innenschläuche 3 und 3a in entsprechende Aufnahmen 6 und 6a des Kupplungsendes 4.

Anschließend (rechte Abbildung in Fig. 5) kann eine Schraubhülse 14 aufgeschoben werden. Das Kupplungsende 4 kann auch für eine andere Verbindungsart, beispielsweise eine Steckverbindung oder eine Renkverbindung, ausgebildet sein.

Wie in Figur 5 gezeigt weist der Außenschlauch 2 eine geflochtene Außenlage auf. Der Außenschlauch 2 weist ferner eine gewellte Innenlage (nicht dargestellt) auf.

Beiden in den Figuren 1-5 gezeigten Ausführungsbeispielen ist gemein, dass die Außendurchmesser der beiden Innenschläuche 3 und 3a jeweils kleiner als ein lichter Innendurchmesser des Außenschlauchs 2, insbesondere kleiner als die Hälfte des lichten Innendurchmessers des Außenschlauchs 2 ist. Derart finden mehr als ein Innenschlauch, im gezeigten Beispiel zwei Innenschläuche, im Außenschlauch 2 Platz.

### Bezugszeichenliste

- 1: (erste) Mehrschlauchanordnung
- 1a: (weitere) Mehrschlauchanordnung
- 2: Außenschlauch
- 3: erster Innenschlauch
- 3a: zweiter Innenschlauch
- 4: erstes Kupplungsende
- 4a: zweites Kupplungsende
- 5: erste Durchflussöffnung
- 5a: Kragen der Durchflussöffnung
- 5b: zweite Durchflussöffnung
- 6: erste Aufnahme
- 6a: zweite Aufnahme
- 6b: dritte bzw. gemeinsame Aufnahme
- 7: erster Schlauchnippel
- 7a: zweiter Schlauchnippel
- 7b: Schlauchnippel(-Bauteil)
- 8: erste Crimphülse
- 8a: zweite Crimphülse
- 9: erstes Dichtelement
- 9a: zweites Dichtelement
- 10: Auflageschulter des Kupplungsendes
- 11: Arretierelement
- 12: Außenhülse
- 13: Innenhülse
- 14: Schraubhülse
- 15: Haltekrempe

## Patentansprüche

1. Mehrschlauchanordnung (1, 1a) mit einem Außenschlauch (2) und wenigstens einem in dem Außenschlauch (2) angeordneten Innenschlauch (3, 3a) und wenigstens einem Kupplungsende (4, 4a), an dem der Außenschlauch (2) und der wenigstens eine Innenschlauch (3, 3a) angebunden sind, wobei das wenigstens eine Kupplungsende (4, 4a) eine Durchflussöffnung (5, 5b) für den Außenschlauch (2) aufweist, in der eine Aufnahme (6, 6a, 6b) für den wenigstens einen Innenschlauch (3, 3a) angeordnet ist, wobei diese Aufnahme den wenigstens einen Innenschlauch (3, 3a) an weniger als einem vollen Umfang des wenigstens einen Innenschlauchs (3, 3a) umgreift, wobei der wenigstens eine Innenschlauch (3, 3a) einen Schlauchnippel (7, 7a, 7b) trägt, der in die Aufnahme (6, 6a) eingesetzt ist, wobei in dem Kupplungsende (4, 4a) eine Absenkung ausgebildet ist, und wobei der Schlauchnippel (7, 7a, 7b) eine Tiefe der Absenkung ausfüllt, so dass das Kupplungsende eine plane Stirnfläche aufweist, in der die Durchflussöffnung (5, 5b) angeordnet ist.

2. Mehrschlauchanordnung (1, 1a) nach Anspruch 1, **dadurch gekennzeichnet, dass** die Aufnahme (6, 6a, 6b) den wenigstens einen Innenschlauch (3, 3a) an mehr als einem halben Umfang umgreift.

3. Mehrschlauchanordnung (1, 1a) nach wenigstens einem der vorangehenden Ansprüche, **dadurch gekennzeichnet, dass** die Durchflussöffnung (5) und die Aufnahme (6, 6a) durch zueinander exzentrisch versetzte Bohrlöcher gebildet sind.

4. Mehrschlauchanordnung (1, 1a) nach wenigstens einem der vorangehenden Ansprüche, **dadurch gekennzeichnet, dass** der Schlauchnippel (7, 7a, 7b) ein vercrimpter Schlauchnippel ist, insbesondere mit einer von innen aufgeweiteten Crimphülse (8, 8a).

5. Mehrschlauchanordnung (1, 1a) nach Anspruch 4, **dadurch gekennzeichnet, dass** der Schlauchnippel (7, 7a, 7b) aus Messing oder Edelstahl gefertigt ist.

6. Mehrschlauchanordnung (1, 1a) nach wenigstens einem der Ansprüche 4 bis 5, **dadurch gekennzeichnet, dass** der Schlauchnippel (7, 7a, 7b) mit einer Presspassung in der Aufnahme (6, 6a, 6b) gehalten ist.

7. Mehrschlauchanordnung (1, 1a) nach wenigstens einem der Ansprüche 4 bis 6, **dadurch gekennzeichnet, dass** an dem Schlauchnippel (7, 7a) ein vorzugsweise umlaufender Haltekragen (15) ausgebildet ist, der sich an dem Kupplungsende (4) abstützt.

8. Mehrschlauchanordnung (1, 1a) nach Anspruch 7, **dadurch gekennzeichnet, dass** der Haltekragen in die Absenkung des Kupplungsendes (4, 4a) passt, insbesondere wobei der Haltekragen (15) die Tiefe der Absenkung ausfüllt.

9. Mehrschlauchanordnung (1, 1a) nach wenigstens einem der vorangehenden Ansprüche, **dadurch gekennzeichnet, dass** auf das freie Kupplungsende (4, 4a) ein Dichtelement (9, 9a) aufgesetzt ist, welches den wenigstens einen Innenschlauch (3, 3a) entlang eines vollen Umfangs umfasst.

10. Mehrschlauchanordnung (1, 1a) nach wenigstens einem der vorangehenden Ansprüche, **dadurch gekennzeichnet, dass** ein Außendurchmesser des wenigstens einen Innenschlauches (3, 3a), insbesondere des zugehörigen Schlauchnippels (7, 7a, 7b), kleiner als ein Innendurchmesser der Durchflussöffnung (5, 5b), insbesondere höchstens halb so groß, ist.

11. Mehrschlauchanordnung (1, 1a) nach wenigstens einem der vorangehenden Ansprüche, **dadurch gekennzeichnet, dass** in dem Außenschlauch (2) wenigstens zwei Innenschläuche (3, 3a) angeordnet sind, deren jeweilige, vorzugsweise gleichartig ausgebildete, Aufnahmen (6, 6a) voneinander beabstandet, insbesondere einander gegenüber liegend, an der Durchflussöffnung (5) angeordnet sind und/oder der jeweilige Schlauchnippel (7, 7a, 7b) getrennt voneinander oder miteinander verbunden, insbesondere einstückig, ausgebildet sind.

12. Mehrschlauchanordnung (1, 1a) nach Anspruch 11, **dadurch gekennzeichnet, dass** zumindest eine der Aufnahmen (6b), in die die miteinander verbundenen, insbesondere einstückig ausgebildeten, Schlauchnippel (7b) eingesetzt sind, weniger als einen halben Umfang des jeweiligen Innenschlauchs (3) umgreift.

13. Mehrschlauchanordnung (1, 1a) nach Anspruch 11 oder 12, **dadurch gekennzeichnet, dass** ein Mittenabstand der wenigstens zwei Innenschläuche (3, 3a) am Kupplungsende (4) wenigstens so groß wie der oder ein Innendurchmesser der Durchflussöffnung (5) ist.

14. Mehrschlauchanordnung (1, 1a) nach wenigstens einem der vorangehenden Ansprüche, **dadurch gekennzeichnet, dass** der Außenschlauch (2) eine vorzugsweise gewellte Innenlage und/oder eine vorzugsweise geflochtene Außenlage aufweist.

15. Mehrschlauchanordnung (1, 1a) nach wenigstens einem der vorangehenden Ansprüche, **dadurch gekennzeichnet, dass** der Außenschlauch (2) mit dem Kupplungsende (4) vercrimpt ist.

## Claims

1. Multi-hose arrangement (1, 1a) having an outer hose (2) and at least one inner hose (3, 3a) disposed in the outer hose (2), and at least one coupling end (4, 4a) to which the outer hose (2) and the at least one inner hose (3, 3a) are attached, wherein the at least one coupling end (4, 4a) has a flow opening (5, 5b) for the outer hose (2), in which flow opening (5, 5b) is disposed a receptacle (6, 6a, 6b) for the at least one inner hose (3, 3a), wherein this receptacle encompasses the at least one inner hose (3, 3a) on less than a full circumference of the at least one inner hose (3, 3a), wherein the at least one inner hose (3, 3a) supports a hose stem (7, 7a, 7b) which is inserted into the receptacle (6, 6a), wherein a depression is configured in the coupling end (4, 4a), and wherein the hose stem (7, 7a, 7b) fills a depth of the depression in such a way that the coupling end has a planar end face in which the flow opening (5, 5b) is disposed.

2. Multi-hose arrangement (1, 1a) according to Claim 1, **characterized in that** the receptacle (6, 6a, 6b) encompasses the at least one inner hose (3, 3a) on more than half the circumference.

3. Multi-hose arrangement (1, 1a) as claimed in at least one of the preceding claims, **characterized in that** the flow opening (5) and the receptacle (6, 6a) are formed by bores which are offset eccentrically relative to one another.

4. Multi-hose arrangement (1, 1a) according to at least one of the preceding claims, **characterized in that** the hose stem (7, 7a, 7b) is a crimped hose stem, in particular having a crimp barrel (8, 8a) that is widened from the inside.

5. Multi-hose arrangement (1, 1a) according to Claim 4, **characterized in that** the hose stem (7, 7a, 7b) is made from brass or stainless steel.

6. Multi-hose arrangement (1, 1a) according to at least one of Claims 4 to 5, **characterized in that** the hose stem (7, 7a, 7b) is held in the receptacle (6, 6a, 6b) by an interference fit.

7. Multi-hose arrangement (1, 1a) according to at least one of Claims 4 to 6, **characterized in that** a preferably encircling retaining collar (15) which is supported on the coupling end (4) is configured on the hose stem (7, 7a).

8. Multi-hose arrangement (1, 1a) according to Claim 7, **characterized in that** the retaining collar fits into the depression of the coupling end (4, 4a), in particular wherein the retaining collar (15) fills the depth of the depression.

9. Multi-hose arrangement (1, 1a) according to at least one of the preceding claims, **characterized in that** a sealing element (9, 9a), which comprises the at least one inner hose (3, 3a) along a full circumference, is placed onto the free coupling end (4, 4a).

10. Multi-hose arrangement (1, 1a) according to at least one of the preceding claims, **characterized in that** an external diameter of the at least one inner hose (3, 3a), in particular of the associated hose stem (7, 7a, 7b), is smaller than an internal diameter of the flow opening (5, 5b), in particular is at most half the size of the latter.

11. Multi-hose arrangement (1, 1a) according to at least one of the preceding claims, **characterized in that** at least two inner hoses (3, 3a) are disposed in the outer hose (2), the respective, preferably identically configured, receptacles (6, 6a) of said inner hoses (3, 3a) being disposed so as to be mutually spaced apart, in particular mutually opposite, on the flow opening (5), and/or the respective hose stems (7, 7a, 7b) being configured so as to be separate from one another or connected to one another, in particular integrally configured.

12. Multi-hose arrangement (1, 1a) according to Claim 11, **characterized in that** at least one of the receptacles (6b), into which the hose stems (7b) connected to one another, in particular integrally configured, are inserted, encompasses less than half a circumference of the respective inner hose (3).

13. Multi-hose arrangement (1, 1a) according to Claim 11 or 12, **characterized in that** a centre spacing of the at least two inner hoses (3, 3a) at the coupling end (4) is at least the size of the or an internal diameter of the flow opening (5).

14. Multi-hose arrangement (1, 1a) according to at least one of the preceding claims, **characterized in that** the outer hose (2) has a preferably corrugated inner layer and/or a preferably braided outer layer.

15. Multi-hose arrangement (1, 1a) according to at least one of the preceding claims, **characterized in that** the outer hose (2) is crimped to the coupling end (4) .

## Revendications

1. Ensemble multi-tuyaux (1, 1a) comportant un tuyau extérieur (2) et au moins un tuyau intérieur (3, 3a) disposé dans le tuyau extérieur (2) et au moins une extrémité de couplage (4, 4a) au niveau de laquelle le tuyau extérieur (2) et l'au moins un tuyau intérieur (3, 3a) sont reliés, l'au moins une extrémité de couplage (4, 4a) présentant une ouverture de passage (5, 5b) pour le tuyau extérieur (2) dans laquelle est disposé un réceptacle (6, 6a, 6b) pour l'au moins un tuyau intérieur (3, 3a), ce réceptacle entourant l'au moins un tuyau intérieur (3, 3a) sur moins que la totalité d'une périphérie de l'au moins un tuyau intérieur (3, 3a), l'au moins un tuyau intérieur (3, 3a) portant un raccord de tuyau (7, 7a, 7b) qui est inséré dans le réceptacle (6, 6a), un abaissement étant formé dans l'extrémité de couplage (4, 4a) et le raccord de tuyau (7, 7a, 7b) remplissant une profondeur de l'abaissement, de sorte que l'extrémité de couplage présente une surface frontale plane dans laquelle est disposée l'ouverture de passage (5, 5b).

2. Ensemble multi-tuyaux (1, 1a) selon la revendication 1, **caractérisé en ce que** le réceptacle (6, 6a, 6b) entoure l'au moins un tuyau intérieur (3, 3a) sur plus de la moitié de la périphérie.

3. Ensemble multi-tuyaux (1, 1a) selon au moins une des revendications précédentes, **caractérisé en ce que** l'ouverture de passage (5) et le réceptacle (6, 6a) sont formés par des trous de perçage décalés de façon excentrique l'un par rapport à l'autre.

4. Ensemble multi-tuyaux (1, 1a) selon au moins une des revendications précédentes, **caractérisé en ce que** le raccord de tuyau (7, 7a, 7b) est un raccord de tuyau serti, en particulier avec une cosse de sertissage (8, 8a) évasée de l'intérieur.

5. Ensemble multi-tuyaux (1, 1a) selon la revendication 4, **caractérisé en ce que** le raccord de tuyau (7, 7a, 7b) est fabriqué en laiton ou en acier inoxydable.

6. Ensemble multi-tuyaux (1, 1a) selon au moins une des revendications 4 à 5, **caractérisé en ce que** le raccord de tuyau (7, 7a, 7b) est maintenu dans le réceptacle (6, 6a, 6b) avec un ajustement serré.

7. Ensemble multi-tuyaux (1, 1a) selon au moins une des revendications 4 à 6, **caractérisé en ce que** sur le raccord de tuyau (7, 7a) est formée une collerette de maintien (15) de préférence périphérique qui s'appuie contre l'extrémité de couplage (4).

8. Ensemble multi-tuyaux (1, 1a) selon la revendication 7, **caractérisé en ce que** la collerette de maintien (15) s'ajuste dans l'abaissement de l'extrémité de couplage (4), en particulier la collerette de maintien (15) remplissant la profondeur de l'abaissement.

9. Ensemble multi-tuyaux (1, 1a) selon au moins une des revendications précédentes, **caractérisé en ce que** sur l'extrémité de couplage libre (A, 4a) est appliqué un élément d'étanchéité (9, 9a) qui entoure au moins un tuyau intérieur (3, 3a) sur la totalité d'une périphérie.

10. Ensemble multi-tuyaux (1, 1a) selon au moins une des revendications précédentes, **caractérisé en ce qu'**un diamètre extérieur de l'au moins un tuyau intérieur (3, 3a), en particulier du raccord de tuyau (7, 7a, 7b) correspondant, est inférieur à un diamètre intérieur de l'ouverture de passage (5, 5b), en particulier est égal au maximum à sa moitié.

11. Ensemble multi-tuyaux (1, 1a) selon au moins une des revendications précédentes, **caractérisé en ce que** dans le tuyau extérieur (2) sont disposés au moins deux tuyaux intérieurs (3, 3a) dont les réceptacles (6, 6a) respectifs, de préférence de forme similaire, sont disposés à distance l'un de l'autre, en particulier à l'opposé l'un de l'autre, au niveau de l'ouverture de passage (5) et/ou dont les raccords de tuyau (7, 7a, 7b) respectifs sont séparés l'un de l'autre ou reliés entre eux, en particulier formés d'une seule pièce.

12. Ensemble multi-tuyaux (1, 1a) selon la revendication 11, **caractérisé en ce qu'**au moins un des réceptacles (6b) dans lequel sont insérés les raccords de tuyau (7b) reliés entre eux, en particulier formés d'une seule pièce, entoure moins de la moitié de la périphérie du tuyau intérieur (3) correspondant.

13. Ensemble multi-tuyaux (1, 1a) selon la revendication 11 ou 12, **caractérisé en ce qu'**un espacement moyen des au moins deux tuyaux intérieurs (3, 3a) au niveau de l'extrémité de couplage (4) est au moins égal au ou à un diamètre intérieur de l'ouverture de passage (5).

14. Ensemble multi-tuyaux (1, 1a) selon au moins une des revendications précédentes, **caractérisé en ce que** le tuyau extérieur (2) comporte une couche intérieure de préférence ondulée et/ou une surface extérieure de préférence tressée.

15. Ensemble multi-tuyaux (1, 1a) selon au moins une des revendications précédentes, **caractérisé en ce que** le tuyau extérieur (2) est serti avec l'extrémité de couplage (4).
